# EUROPÄISCHE PATENTANMELDUNG

(11) **EP 1 652 821 A1**
(43) Veröffentlichungstag der Anmeldung: **03.05.2006**
(21) Anmeldenummer: 05022846.9
(22) Anmeldetag: 20.10.2005
(51) Int. Cl.: C02F 1/40, B01D 21/24, B01D 17/032

(54) **Klarwasserabzugseinrichtung**

(30) Priorität: 30.10.2004 DE 202004016822 U
(71) Anmelder: Ferrus Cyklar GmbH, 24536 Neumünster (DE)
(72) Erfinder: Schulz-Pflugbeil, Alexander, Dipl.-Ing., 24229 Dänischenhagen-Sprenge (DE)
(74) Vertreter: Biehl, Christian

(57) **Zusammenfassung**

Klarwasserabzugseinrichtung mit einem Schwimmkörper (10), einer in einem Passitz am Schwimmkörper anliegenden Ablaufwanne (12) mit Anschluß an ein Abzugsrohr, wobei die Ablaufwanne (12) mit einem, mit seinem einen Ende am Schwimmkörper (10) vertikal verschwenkbar gelagerten Hebel (14), dessen anderes Ende an einem elektromechanischem Aktuator höhenveränderlich relativ zum Schwimmer angesetzt ist, gekoppelt ist.

## Beschreibung

Die vorliegende Erfindung betrifft eine Klarwasserabzugseinrichtung mit einem Schwimmkörper, einer in einem Passitz am Schwimmkörper anliegenden Ablaufwanne mit einem Anschluß an ein Abzugsrohr nach dem Oberbegriff des Hauptanspruches.

Klarwasserabzugseinrichtungen kommen insbesondere zum Ableiten von Klarwasser, d. h. von nicht mit Schwebstoffen belasteten Flüssigkeiten aus Bio-Klärreaktoren zum Einsatz, die nach dem SBR-Prinzip *(engl. Sequence batch reactor)* arbeiten. Bei diesem Behandlungsverfahren finden alle zur weitergehenden Abwasserreinigung notwendigen Behandlungsschritte in zeitlicher Abfolge in nur einem Behälter, dem Reaktor, statt.

Die Einsparungen, insbesondere an verbrauchter Grundfläche zur Aufstellung einer solchen Anlage gegenüber einer Kläranlage mit mehreren Klärbecken sind für einen SBR-Reaktor klar ersichtlich.

Eine gattungsbildende, als Dekanter bezeichnete Klarwasserabzugseinrichtung ist bereits aus der DE 103 11 402 A 1 vorbekannt. Ebenso wie in jener Anmeldung liegt der vorliegenden Anmeldung die Aufgabe zugrunde, in Abhängigkeit von der Schmutzfracht, die auch als "Schwimmschlamm" an der Wasseroberfläche vorhanden sein kann, Klarwasser aus verschiedenen Wasserniveaus, insbesondere auch aus einer mittleren Schicht abzuführen.

Dazu wird eine Ablaufwanne, ein vergleichsweise großes Element, in dem Reaktor auf und ab bewegt. Hierzu sind vergleichsweise große Kräfte aufzuwenden, um die schwere Einheit entweder gegen die Schwerkraft oder gegen den Auftrieb durch das Wasser zu bewegen.

Die Vorrichtung nach dem Stand der Technik weist hierzu lediglich einen Hydraulikstempel auf, der zur Erfüllung der Aufgabe sehr groß zu dimensionieren und aufwendig zu befestigen ist. Um die notwendige Kraft aufzubringen, muss ein teurer doppeltwirkender Hydraulikzylinder vorgesehen werden, oder es muss eine sehr starke Rückholfeder vorgesehen werden, der jedoch dann in der ersten Richtung mit zusätzlicher Kraft entgegengewirkt werden muß, was wieder einen noch größeren Hydraulikzylinder voraussetzt.

Erfindungsgemäß wird vorgeschlagen, die Ablaufwanne mit einem, mit seinem einen Ende am Schwimmkörper vertikal verschwenkbar gelagerten Hebel, dessen anderes Ende an einem elektromechanischem Aktuator höhenveränderlich relativ zum Schwimmer angesetzt ist, zu koppeln.

Vorteilhafterweise setzt die Kopplung der Ablaufwanne im Bereich des Hebeldrittels nahe der höhenveränderlichen Seite des Hebels an. Weiter wird in einer vorteilhaften Ausführungsform die Ablaufwanne durch eine in einer vertikalen Lagerung im Schwimmkörper von der unter dem Schwimmkörper vorgesehenen Ablaufwanne zum Hebel oberhalb des Schwimmkörpers verlaufende Stange bewegt.

Eine Langlochführung in der Stange führt bevorzugt wiederum einen durch den Hebel hindurch sich erstreckenden horizontal eingesetzten Bolzen, wobei das Ende der Stange zur Halterung einer Spiralfeder um das Stangenende ausgebildet ist, und sich eine Spriralfeder auf dem Bolzen im Hebel abstützt, zum schließenden Anheben der Ablaufwanne an den Schwimmer.

Ein Doppelachs-Schwenkgelenk zwischen Hebel und einem auf dem Schwimmer sich nach oben erstreckenden Ansatz sorgt schließlich dafür, daß die bei Winkeländerung sich ergebende überschießende Hebellänge in einen Raum oberhalb des Ansatzes verschwenken kann, so daß ein Verkanten der Stange in der Schwimmerführung vermieden ist.

Weitere Merkmale und Vorteile der Erfindung ergeben sich aus nachfolgender Beschreibung anhand eines bevorzugten Ausführungsbeispiels anhand der beigefügten Zeichnung. Dabei zeigt:
- Fig. 1: die Klarwasserabzugsvorrichtung im seitlicher Darstellung in geöffneter Position,
- Fig. 2: die Klarwasserabzugsvorrichtung im seitlicher Darstellung in geschlossener Position,
- Fig. 3: die Anordnung der Klarwasserabzugsvorrichtung im Reaktorbehälter in seitlichem Schnitt mit einer Unterstützung zur Halterung bei Entleerung des Reaktorbehälters bis unterhalb des minimalen Wasserspiegels, und
- Fig.4: die Anordnung der Klarwasserabzugsvorrichtung im Reaktorbehälter in Draufsicht mit dem Abzugsrohr, das aus dem Reaktorbehälter herausführt.

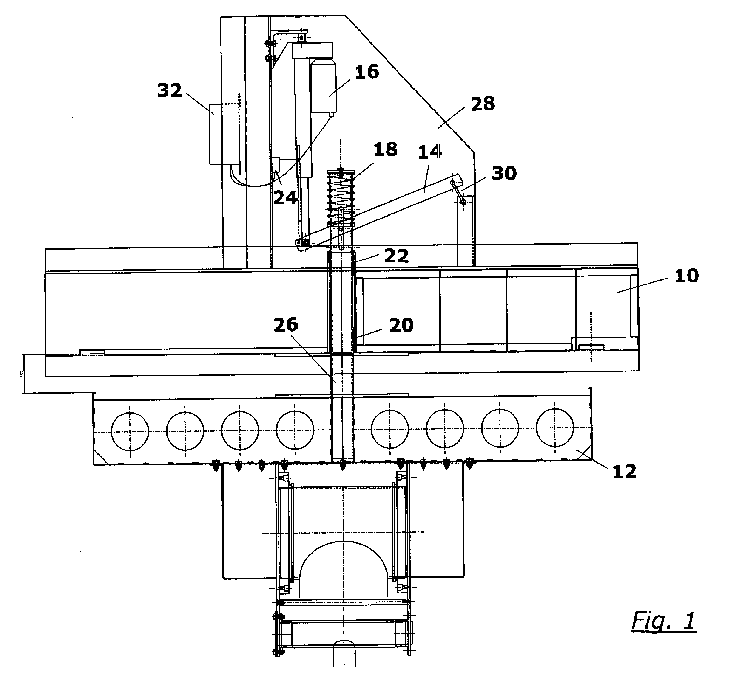

Die Klarwasserabzugseinrichtung wie sie in Fig. 1 dargestellt ist, ist mit einem Schwimmkörper (10) und einer in einem Passitz am Schwimmkörper anliegenden Ablaufwanne (12) (an die ein Abzugsrohr anschließt) versehen.

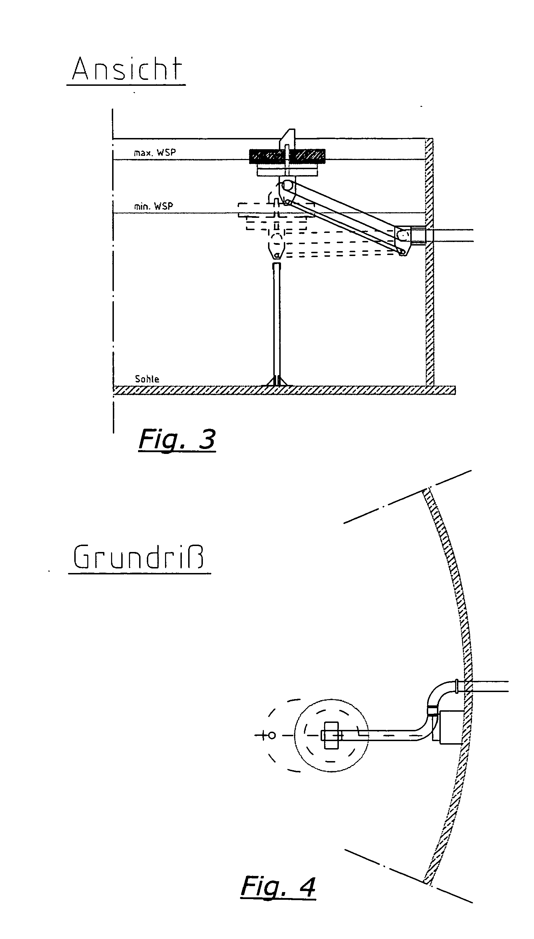

In Fig. 3 kann die insgesamt dem Wasserspiegel folgende Anordnung des Schwimmers im Reaktorbecken erkannt werden. Das Abzugsrohr ist dabei parallelogrammartig unterstütz, so daß der Schwimmer beim Absenken immer den gleichen Schwenkweg zurücklegt. Dies macht es möglich ihn, für in einer Position minimalen Wasserstands durch einen z.B. zentral angeordneten Ständer zu unterstützen.

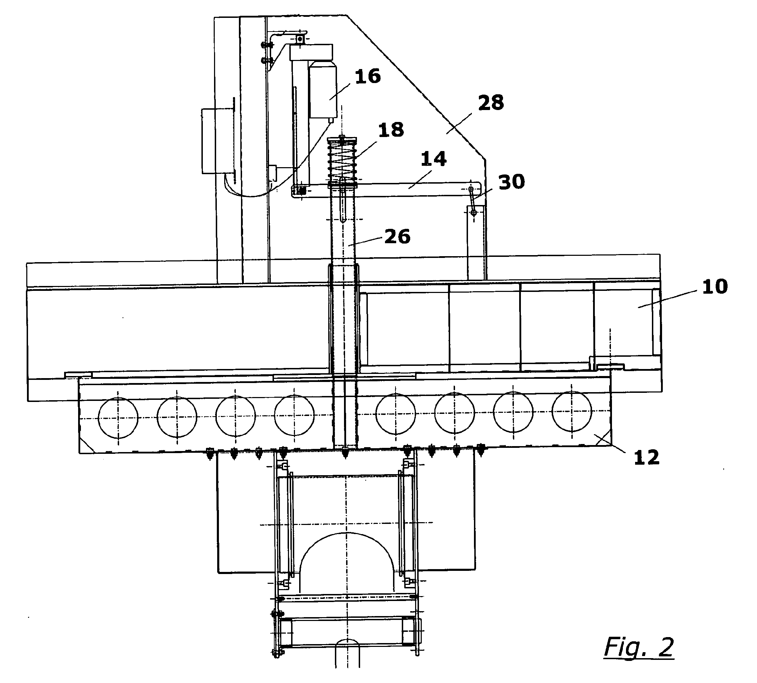

In Fig. 2 ist nun wie in Fig. 1 nur mit dem Unterschied, daß jetzt der Ablauf geschlossen ist, da die Ablaufwanne 12 an den Schwimmer angehoben ist, die Ablaufwanne 12 und darüber der Schwimmkörper und auf diesem ein mit seinem einen Ende am Schwimmkörper 10 vertikal verschwenkbar gelagerter Hebel 14, dessen anderes Ende an einem elektromechanischem Aktuator höhenveränderlich relativ zum Schwimmer angesetzt ist, dargestellt.

Die Ablaufwanne 12 ist im Bereich des Hebeldrittels nahe der höhenveränderlichen Seite des Hebels angekoppelt, wobei eine Stange 26 die Ablaufwanne 12 hindurch durch eine vertikale Lagerung 20, 22 in dem Schwimmkörper 10 von der unter des Schwimmkörpers 10 vorgesehenen Ablaufwanne 12 bis zum Hebel 14 oberhalb des Schwimmkörpers 10 die Verbindung bildet.

Eine Langlochführung in der Stange 26 führt dabei bevorzugt einen durch den Hebel 14 hindurch sich erstreckenden horizontal eingesetzten Bolzen, wobei das Ende der Stange 26 zur Halterung einer Spiralfeder 18 um das Stangenende ausgebildet ist, die sich auf diesem Bolzen im Hebel 14 zum schließenden Anheben der Ablaufwanne 12 an den Schwimmer abstützt. Dadurch werden die Betätigungskräfte vergleichmäßigt und insgesamt vernngert.

Ein Doppelachs-Schwenkgelenk 30 zwischen Hebel 14 und einem auf dem Schwimmer sich nach oben erstreckenden Ansatz dient schließlich zur Vermeidung des Verkantens der Stange 26 in der Schwimmerführung 20, 22.

## Patentansprüche

1. Klarwasserabzugseinrichtung mit einem Schwimmkörper (10), einer in einem Passitz am Schwimmkörper anliegenden Ablaufwanne (12) mit Anschluß an ein Abzugsrohr, **dadurch gekennzeichnet, daß**
die Ablaufwanne (12) mit einem, mit seinem einen Ende am Schwimmkörper (10) vertikal verschwenkbar gelagerten Hebel (14), dessen anderes Ende an einem elektromechanischem Aktuator höhenveränderlich relativ zum Schwimmer angesetzt ist, gekoppelt ist.

2. Klarwasserabzugseinrichtung nach Anspruch 1, **dadurch gekennzeichnet, dass** die Kopplung der Ablaufwanne (12) im Bereich des Hebeldrittels nahe der höhenveränderlichen Seite des Hebels ansetzt.

3. Klarwasserabzugseinrichtung nach einem der vorangehenden Ansprüche, **dadurch gekennzeichnet, daß** die Kopplung der Ablaufwanne (12) durch eine in einer vertikalen Lagerung (20, 22) in den Schwimmkörper (10) von der unter dem Schwimmkörper (10) vorgesehenen Ablaufwanne (12) zum Hebel (14) oberhalb des Schwimmkörpers (10) verlaufende Stange (26) gebildet wird.

4. Klarwasserabzugseinrichtung nach einem der vorangehenden Ansprüche, **dadurch gekennzeichnet, daß** eine Langlochführung in der Stange (26) einen durch den Hebel (14) hindurch sich erstreckenden horizontal eingesetzten Bolzen führt, und das Ende der Stange (26) zur Halterung einer Spiralfeder (18) um das Stangenende ausgebildet ist, die sich auf diesem Bolzen im Hebel (14) zum schließenden Anheben der Ablaufwanne (12) an den Schwimmer abstützt.

5. Klarwasserabzugseinrichtung nach einem der vorangehenden Ansprüche, **gekennzeichnet durch** ein Doppelachs-Schwenkgelenk (30) zwischen Hebel (14) und einem auf dem Schwimmer sich nach oben erstreckenden Ansatz zu Vermeidung des Verkantens der Stange (26) in der Schwimmerführung (20, 22).
